(19) Europäisches Patentamt
European Patent Office
Office européen des brevets

(11) EP 0 644 836 B1

(12) EUROPÄISCHE PATENTSCHRIFT

(45) Veröffentlichungstag und Bekanntmachung des Hinweises auf die Patenterteilung:
23.10.1996 Patentblatt 1996/43

(21) Anmeldenummer: 94911829.3

(22) Anmeldetag: 30.03.1994

(51) Int. Cl.$^6$: **B60T 8/00**

(86) Internationale Anmeldenummer:
PCT/DE94/00357

(87) Internationale Veröffentlichungsnummer:
WO 94/22697 (13.10.1994 Gazette 1994/23)

(54) **BREMSSYSTEM**

BRAKING SYSTEM

SYSTEME DE FREINAGE

(84) Benannte Vertragsstaaten:
**DE FR GB**

(30) Priorität: **03.04.1993 DE 4311077**

(43) Veröffentlichungstag der Anmeldung:
**29.03.1995 Patentblatt 1995/13**

(73) Patentinhaber: **ROBERT BOSCH GMBH**
**70442 Stuttgart (DE)**

(72) Erfinder:
• **GROSSARDT, Bernd**
**D-74357 Bönnigheim (DE)**
• **SONNTAG, Eberhard**
**D-70893 Gerlingen (DE)**

(56) Entgegenhaltungen:
**EP-A- 0 338 414**     **WO-A-90/06869**
**WO-A-91/06453**     **DE-A- 4 016 659**

## Beschreibung

Stand der Technik

Verfahren und Vorrichtungen zur Steuerung eines Bremssystems mit den Merkmalen des Oberbegriffs der Ansprüche 1, 6, 7 und 8 sind bekannt.

Aus der WO 90/06869 ist ein Antiblockierregelsystem bekannt, bei dem ein Instabilitätsgrenzwert vorgegeben wird und eine Summe aus vom Radschlupf und der Radverzögerung abhängigen Signalen mit diesen Grenzwert verglichen wird und bei dem bei Überschreiten des Grenzwerts eine Druckabsenkung eingeleitet wird. Dabei wird das Instabilitätskriterium, das mit dem Grenzwert verglichen wird, abhängig von der relativen Radverzögerung, dem Radschlupf, dem Integral des Radschlupfs und der errechneten Fahrzeugverzögerung gebildet.

Der DE,A1,40 16 659 ist ein Antiblockierregelsystem zu entnehmen, bei dem im Blockierfall, der durch eine Auswertung der Radverzögerung des Radschlupfes erfaßt wird, der Bremsdruck abgesenkt wird. Der Steigerungsbetrag, der erforderlich ist, nachdem der Bremsdruck gesenkt worden ist, wird mittels eines Steigerungsbetragsrechners auf der Grundlage der Fahrzeugverzögerung und der Druckabsenkungszeitspanne bestimmt.

Die Güte der Abbremsung eines ABS-geregelten Fahrzeuges und die Pedalrückwirkungen hängen davon ab, mit welcher Schnelligkeit das erforderliche optimale Druckniveau erreicht wird, wobei die Amplitude der Druckmodulation sehr klein sein muß. Die Amplitude der Druckmodulation ist dabei wesentlich von der Größe des vorhergehenden Druckabbaus abhängig bzw. davon, wie groß die Zeitdauer der Ansteuerung des Auslaßventils ist.

Zur Bemessung der Auslaßventilansteuerzeit ist z.B. ein Verfahren bekannt, das einen aus der "Vorgeschichte" der Regelung ermittelten Wert mit einer konstanten Größe korrigiert und abhängig vom aktuellen Radverlauf diese Zeit verändern kann.

Auch ist ein Verfahren bekannt, das einen ebensolchen Zeitwert aus der Vorgeschichte benutzt, diesen aber mit einem von der Radbeschleunigung des vorherigen Regelzyklus abhängigen Korrekturwert berechnet, wobei der Korrekturwert der Radbeschleunigung umgekehrt proportional ist.

Nachteil dieser bekannten Lösungen ist, daß der Druckabbau durch die stets vorhandenen Systemverzugszeiten nicht zum physikalischen Radverlauf paßt oder daß aufgrund vorhandener Fahrbahnstörungen die ABS-Regelung, beispielsweise bei kleinen Radwiederbeschleunigungen, mit Regelschwingungen reagiert, so daß insgesamt das Ziel einer kleinen Druckmodulation nicht erreicht wird.

Vorteile der Erfindung

Diese Nachteile werden durch das vorgeschlagene Bremssystem beseitigt, indem die Radbeschleunigung (bzw. die Radwiederbeschleunigung) und der Schlupf im instabilen Gebiet des Rades bestimmt werden und in Beziehung zu vorgegebenen Größen gesetzt werden, woraus die Berechnung der Abbauzeit des neuen Regelzyklus derart erfolgt, daß die auf den Druckabbau folgende Radwiederbeschleunigung einer vorausberechneten Größe entspricht.

Die Erfindung geht dabei aus von einem Bremssystems, im allgemeinen ein Antiblockiersystem, für die Räder eines Fahrzeugs bestehend aus Sensoren zur Ermittlung des Radbewegungsverhaltens, einer Auswerteschaltung zur Verarbeitung der Sensorsignale und zur Erzeugung von Bremsdrucksteuersignalen, und einer Bremsdrucksteuereinheit, der die Bremsdrucksteuersignale zur Druckvariation zugeführt werden. Hierbei können Schlupfsignale und Beschleunigungssignale wenigstens eines Rades oder einer Radgruppe gebildet werden. Die Erfindung zeichnet sich dadurch aus, die Bremsdrucksteuersignale derart bestimmt werden, daß die Beschleunigung wenigstens eines Rades auf Werte begrenzt wird, die von dem maximalen Schlupfwert innerhalb eines vorgebbaren Zeitintervalls abhängig sind. Hierzu kann innerhalb des vorgebbaren Zeitintervalls aus den Schlupfsignalen der maximale Schlupfwert ermittelt werden. Die Bremsdrucksteuersignale werden dann derart bestimmt, daß die Beschleunigung wenigstens eines Rades auf Werte begrenzt wird, die von dem maximalen Schlupfwert abhängig sind.

Besonders vorteilhaft ist es, daß zur Druckvariation Bremsdrucksteuersignale erzeugt werden, deren Dauer abhängig von dem ermittelten maximalen Schlupfwert bestimmt wird.

Weiterhin kann in einer vorteilhaften Ausgestaltung der Erfindung vorgesehen sein, daß zur Bestimmung der Dauer der Bremsdrucksteuersignale eine Grunddauer und eine Korrekturgröße zur Korrektur der Grunddauer ermittelt wird, wobei die Korrekturgröße abhängig von dem ermittelten maximalen Schlupfwert ermittelt wird.

Das vorgegbene Zeitintervall kann einem Regelzyklus entsprechen. Die erwähnte Korrekturgröße dient dann zur Korrektur der Grunddauer der Druckvariation im folgenden Regelzyklus.

Weiterhin ist es vorteilhaft, daß innerhalb des vorgebbaren Zeitintervalls aus den Beschleunigungssignalen wenigstens eines Rades oder einer Radgruppe der maximale Beschleunigungswert ermittelt wird. Aus dem ermittelten maximalen Schlupfwert wird dann ein korrigierter Sollwert für die Beschleunigung des Rades oder der Räder ermittelt, wonach dieser Sollwert mit dem ermittelten maximalen Beschleunigungswert verglichen wird. Abhängig von der Differenz zwischen dem ermittelten maximalen Beschleunigungswert und dem korrigierten Sollwert kann dann die Korrekturgröße ermittelt werden.

Weitere vorteilhafte Ausgestaltungen der Erfindung sind den im folgenden beschriebenen Ausführungsbeispielen zu entnehmen.

Figurenbeschreibung

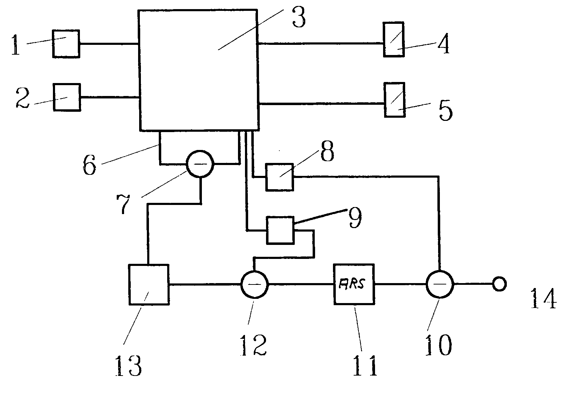

Anhand der Zeichnung wird ein Ausführungsbeispiel der Erfindung erläutert.

Mit 1 und 2 sind die Sensoren der Räder einer Achse bezeichnet, deren Signale in einer Auswerteschaltung 3 ausgewertet werden. In der Auswerteschaltung 3 werden abhängig vom ermittelten Radbewegungsverhalten Bremsdrucksteuersignale für den Rädern zugeordnete 3/3-Bremsdrucksteuerventile 4 und 5 erzeugt. Die Auswerteschaltung berechnet unter anderem die Ansteuerdauer TVAI für die einzelnen Ventile 4 und 5.

Die folgende Beschreibung gilt für eines der Räder. Genau die gleiche Einrichtung ist auch für das andere Rad vorgesehen. Die in den folgenden Absätzen beschriebene Korrekturschaltung ist tatsächlich Teil der Auswerteschaltung 3.

Die Auswerteschaltung gibt über eine Leitung 6 die Dauer TVAI des Druckabbausignals an einen Subtrahierer 7, der diese Dauer korrigiert und das korrigierte Signal zur Verarbeitung an die Auswerteschaltung zurückspeist.

Zur Korrekturermittlung liefert die Auswerteschaltung 3 den dort ermittelten Radschlupf SRI und die Radwiederbeschleunigung ARI. Der Radschlupf SRI kann beispielweise aus der gemessenen Radgeschwindigkeit Vr und der Fahrzeuglängsgeschwindigkeit Vf in bekannter Weise gemäß $SRI = (Vf-Vr)/Vf$ ermittelt werden. Die Radwiederbeschleunigung bzw. die Radbeschleunigung kann durch zeitliches Differenzieren der Raddrehzahl bzw. der Radgeschwindigkeit Vr erhalten werden.

In Blöcken 8 und 9 wird jeweils der maximale Wert SRIM bzw. ARIM dieser Größen in einem Regelzyklus ermittelt und abgespeichert. An einer Klemme 14 wird ein Sollschlupfwert SRS von z.B. 7% vorgegeben. Ein Subtrahierer 10 bildet die Differenz $DSR = (SRIM - SRS)*C_1 + C_2$. $C_1$ und $C_2$ sind Systemkonstanten, die z.B. 0,7 bzw. 0 betragen können. Aus der Differenz DSR wird in einem Übertragungsglied 11 mit einer linearen Funktion $ARS = f(DSR)$ eine Radbeschleunigungssollgröße ARS ermittelt; in einem Subtrahierer 12 wird diese Sollgröße mit dem ermittelten Maximalwert ARIM verglichen. Die Differenz $DAR = (ARIM - ARS)*C_3$ wird einem Übertragungsglied 13 zugeführt, welches daraus über eine lineare Funktion $TVAK = f(DAR)$ den Korrekturwert TVAK für die Dauer des Druckabbausignals bildet, das dem Subtrahierer 7 zugeführt wird. DAR kann z.B. 1g betragen, woraus sich TVAK = 3 ms ergibt; $C_3$ kann z.B. 3 ms/g sein.

In den folgenden Zeilen wird eine etwas anders geartete Korrektur beschrieben. Aus der Schlupfabweichung $DSR = SRIM - SRS$ wird eine Radwiederbeschleunigungssollwertkorrektur ARK berechnet, wobei SRS bezogen auf die Referenzgeschwindigkeit mit z.B. 5% vorgegeben wird $ARK = DSR * C_1'$. Mit dem Radbeschleunigungskorrekturwert wird der Beschleunigungssollwert korrigiert. Die Konstante hat z.B. eine Größe von C1' = 0.7 % /g.

$$ARS = ARK + C2'$$

Damit steht der Radbeschleunigungssollwert ARS zur Verfügung; die Konstante kann z.B. C2' = 3.5g betragen.

$$DAR = ARIM - ARS$$

DAR als Ergebnis des IST/SOLL-Vergleiches wird mit der Konstanten C3 in eine Korrekturzeit für den folgenden Abbau umgerechnet.

$$TAVK = DAR * C3$$

Eine geeignete Größe ist z.B. C3 = 4 ms /g.

Wenn beispielsweise die Extremwerte eines Radeinlaufes

$$SRIM = 9 \% \text{ und}$$

$$ARIM = 8 \text{ g}$$

betragen, errechnet sich die Abbauzeitkorrektur, um die der folgende Abbau aus dem alten Wert berechnet wird, wie folgt zu:

| | |
|---|---|
| DSR | = 9% - 5% = 4%, |
| ARK | = 4% * 0.7 g/% = 2.8g, |
| ARS | = 3.5g + 2.8g = 6.3g, |
| DAR | = 8g - 6.3g = 1.7g |
| TAVK | = 1.7g * 4 ms/g = 6.8 ms |

Da der vorhergehende Abbau zu groß war, hatte das Rad mit 8g eine zu große Wiederbeschleunigung; deswegen wird der neue Abbau prediktiv um ca. 7 ms kleiner initialisiert als der alte.

$$TAV = TAVI - 7 \text{ ms}$$

Zusammenfassend kann gesagt werden, daß das erfindungsgemäße Antiblockierregelsystem gemäß dem Ausführungsbeispiel aus Sensoren zur Ermittlung des Radbewegungsverhaltens, einer Auswerteschaltung zur Verarbeitung der Sensorsignale und zur Erzeugung von Bremsdrucksteuersignalen, und einer Bremsdrucksteuereinheit, der die Bremsdrucksteuersignale zur Druckvariation zugeführt werden, besteht. Dabei werden Schlupfsignale und Beschleunigungs- und Verzögerungssignale der Räder oder Radgruppen gebildet und ermittelte Druckabbausignale erzeugt, deren Dauer TAVI in der Auswerteschaltung bestimmt wird. Kern der Erfindung gemäß dem Ausführungsbeispiel ist es, daß jeweils innerhalb eines Regelzyklus der maximale Schlupfwert SRIM und der maximale Radwiederbeschleunigungswert ARIM ermittelt wird, und daß aus dem maximalen Schlupfwert SRIM ein korrigierter Radbeschleunigungssollwert ARS gewonnen wird, und daß dieser Radbeschleunigungssollwert ARS mit dem maximalen Radwiederbeschleunigungswert ARIM verglichen wird und mittels der Differenz DAR eine Korrekturgröße TAVK = f (DAR) für die Dauer TAVI des Druckabbauimpulses im folgenden Regelzyklus gebildet wird, mit dem die Druckabbaudauer TAVI korrigiert wird ( TAV = (TAVI - TAVK )).

Es wird ein Bremssystem beschrieben, das die Druckabbausignaldauer berechnet. Hierbei wird die Radbeschleunigung (bzw. die Radwiederbeschleunigung) und der Schlupf im instabilen Gebiet des Rades bestimmt und in Beziehung zu vorgegebenen Größen gesetzt werden, woraus die Berechnung der Abbauzeit des neuen Regelzyklus derart erfolgt, daß die auf den Druckabbau folgende Radwiederbeschleunigung einer vorausberechneten Größe entspricht. Diese Signaldauer wird korrigiert, um die Amplitude der Druckmodulation klein zu halten.

**Patentansprüche**

1. Verfahren zur Steuerung eines Bremssystems für die Räder eines Fahrzeugs bestehend aus Sensoren (1, 2) zur Ermittlung des Radbewegungsverhaltens, einer Auswerteschaltung (3) zur Verarbeitung der Sensorsignale und zur Erzeugung von Bremsdrucksteuersignalen (TAV), und einer Bremsdrucksteuereinheit (4, 5), der die Bremsdrucksteuersignale zur Druckvariation zugeführt werden, wobei Schlupfsignale (SRI) und Beschleunigungssignale (ARI) wenigstens eines Rades oder einer Radgruppe gebildet werden, dadurch gekennzeichnet, daß innerhalb eines vorgebbaren Zeitintervalls aus den Schlupfsignalen (SRI) der maximale Schlupfwert (SRIM) ermittelt wird, und die Bremsdrucksteuersignale (TAV) derart bestimmt werden, daß die Beschleunigung (ARI) wenigstens eines Rades auf Werte (ARS) begrenzt wird, die von dem maximalen Schlupfwert (SRIM) abhängig sind.

2. Verfahren nach Anspruch 1, dadurch gekennzeichnet, daß zur Druckvariation Bremsdrucksteuersignale erzeugt werden, deren Dauer (TAV) abhängig von dem ermittelten maximalen Schlupfwert (SRIM) bestimmt wird.

3. Verfahren nach Anspruch 2, dadurch gekennzeichnet, daß zur Bestimmung der Dauer (TAV) der Bremsdrucksteuersignale eine Grunddauer (TAVI) und eine Korrekturgröße (TAVK) zur Korrektur der Grunddauer (TAVI) ermittelt wird, wobei die Korrekturgröße (TAVK) abhängig von dem ermittelten maximalen Schlupfwert (SRIM) ermittelt wird.

4. Verfahren nach Anspruch 3, dadurch gekennzeichnet, daß das vorgegbene Zeitintervall einem Regelzyklus entspricht und die Korrekturgröße (TAVK) zur Korrektur der Grunddauer (TAVI) der Druckvariation im folgenden Regelzyklus dient.

5. Verfahren nach Anspruch 3 oder 4, dadurch gekennzeichnet, daß innerhalb des vorgebbaren Zeitintervalls aus den Beschleunigungssignalen (ARI) wenigstens eines Rades oder einer Radgruppe der maximale Beschleunigungswert (ARIM) ermittelt wird und aus dem ermittelten maximalen Schlupfwert (SRIM) ein korrigierter Sollwert (ARS) für die Beschleunigung des Rades oder der Räder ermittelt wird und dieser Sollwert (ARS) mit dem ermittelten maximalen Beschleunigungswert (ARIM) verglichen wird und abhängig von der Differenz (DAR) zwischen dem ermittelten maximalen Beschleunigungswert (ARIM) und dem korrigierten Sollwert (ARS) die Korrekturgröße (TAVK) ermittelt wird.

6. Vorrichtung zur Durchführung des Verfahrens nach Anspruch 1 zur Steuerung eines Bremssystems für die Räder eines Fahrzeugs, bei der Sensoren (1, 2) zur Ermittlung des Radbewegungsverhaltens, eine Auswerteschaltung (3) zur Verarbeitung der Sensorsignale und zur Erzeugung von Bremsdrucksteuersignalen (TAV), und eine Bremsdrucksteuereinheit (4, 5), der die Bremsdrucksteuersignale zur Druckvariation zugeführt werden, wobei Schlupfsignale (SRI) und Beschleunigungssignale (ARI) wenigstens eines Rades oder einer Radgruppe gebildet werden, vorgesehen sind, dadurch gekennzeichnet, daß die Auswerteschaltung (3, 6-14) derart ausgestaltet ist, daß innerhalb eines vorgebbaren Zeitintervalls aus den Schlupfsignalen (SRI) der maximale Schlupfwert (SRIM) ermittelt wird, und die Bremsdrucksteuersignale (TAV) derart bestimmt werden, daß die Beschleunigung (ARI) wenigstens eines Rades auf Werte (ARS) begrenzt wird, die von dem maximalen Schlupfwert (SRIM) abhängig sind.

7. Verfahren zur Steuerung eines Bremssystems für die Räder eines Fahrzeugs bestehend aus Sensoren (1, 2) zur Ermittlung des Radbewegungsverhaltens, einer Auswerteschaltung (3) zur Verarbeitung der Sensorsignale und zur Erzeugung von Bremsdrucksteuersignalen (TAV), und einer Bremsdrucksteuereinheit (4, 5), der die Bremsdrucksteuersignale zur Druckvariation zugeführt werden, dadurch gekennzeichnet, daß die Bremsdrucksteuersignale (TAV) derart bestimmt werden, daß die Beschleunigung (ARI) wenigstens eines Rades auf Werte (ARS) begrenzt wird, die von dem maximalen Schlupfwert (SRIM) innerhalb eines vorgebbaren Zeitintervalls abhängig sind.

8. Vorrichtung zur Durchführung des Verfahren nach Anspruch 7 zur Steuerung eines Bremssystems für die Räder eines Fahrzeugs, bei der Sensoren (1, 2) zur Ermittlung des Radbewegungsverhaltens, eine Auswerteschaltung (3) zur Verarbeitung der Sensorsignale und zur Erzeugung von Bremsdrucksteuersignalen (TAV), und eine Bremsdrucksteuereinheit (4, 5), der die Bremsdrucksteuersignale zur Druckvariation zugeführt werden, vorgesehen sind, dadurch gekennzeichnet, daß Auswerteschaltung (3, 6-14) zur Bestimmung der Bremsdrucksteuersignale (TAV) derart ausgestaltet ist, daß die Beschleunigung (ARI) wenigstens eines Rades auf Werte (ARS) begrenzt wird, die von dem maximalen Schlupfwert (SRIM) innerhalb eines vorgebbaren Zeitintervalls abhängig sind.

## Claims

1. Method for controlling a brake system for the wheels of a vehicle, consisting of sensors (1, 2) for determining the behaviour of the wheel motion, an evaluation circuit (3) for processing the sensor signals and for generating brake pressure control signals (TAV), and a brake pressure control unit (4, 5) which is fed the brake pressure control signals for the purpose of pressure variation, slip signals (SRI) and acceleration signals (ARI) of at least one wheel or a wheel group being formed, characterized in that the maximum slip value (SRIM) is determined within a prescribable time interval from the slip signals (SRI), and the brake pressure control signals (TAV) are determined in such a way that the acceleration (ARI) of at least one wheel is limited to values (ARS) which depend on the maximum slip value (SRIM).

2. Method according to Claim 1, characterized in that brake pressure control signals whose duration (TAV) is determined as a function of the maximum slip value (SRIM) determined are generated for the purpose of pressure variation.

3. Method according to Claim 2, characterized in that a basic duration (TAVI) and a correcting quantity (TAVK) for correcting the basic duration (TAVI) are determined in order to determine the duration (TAV) of the brake pressure control signals, the correcting quantity (TAVK) being determined as a function of the maximum slip value (SRIM) determined.

4. Method according to Claim 3, characterized in that the prescribed time interval corresponds to a control cycle and the correcting quantity (TAVK) is used to correct the basic duration (TAVI) of the pressure variation in the following control cycle.

5. Method according to Claim 3 or 4, characterized in that the maximum acceleration value (ARIM) is determined within the prescribable time interval from the acceleration signals (ARI) of at least one wheel or a wheel group, and a corrected desired value (ARS) for the acceleration of the wheel or the wheels is determined from the maximum slip value (SRIM) determined and this desired value (ARS) is compared with the maximum acceleration value (ARIM) determined, and the correcting quantity (TAVK) is determined as a function of the difference (DAR) between the maximum acceleration value (ARIM) determined and the corrected desired value (ARS).

6. Device for carrying out the method according to Claim 1 for controlling a brake system for the wheels of a vehicle, in which there are provided sensors (1, 2) for determining the behaviour of the wheel motion, an evaluation circuit (3) for processing the sensor signals and for generating brake pressure control signals (TAV), and a brake pressure control unit (4, 6) which is fed the brake pressure control signals for the purpose of pressure variation, slip signals (SRI) and acceleration signals (ARI) of at least one wheel or a wheel group being formed, characterized in that the evaluation circuit (3, 6-14) is configured in such a way that the maximum slip value (SRIM) is determined within a prescribable time interval from the slip signals (SRI), and the brake pressure control signals (TAV) are determined in such a way that the acceleration (ARI) of at least one wheel is limited to values (ARS) which depend on the maximum slip value (SRIM).

7. Method for controlling a brake system for the wheels of a vehicle, consisting of sensors (1, 2) for determining the behaviour of the wheel motion, an evaluation circuit (3) for processing the sensor signals and for generating brake pressure control signals (TAV), and a brake pressure control unit (4, 5) which is fed the brake pressure control signals for the purpose of pressure variation, characterized in that the brake pressure control signals (TAV) are determined in such a way that the acceleration (ARI) of at least one wheel is limited to values (ARS) which depend on the maximum slip value (SRIM) within a prescribable time interval.

8. Device for carrying out the method according to Claim 7 for controlling a brake system for the wheels of a vehicle, in which there are provided sensors (1, 2) for determining the behaviour of the wheel motion, an evaluation circuit (3) for processing the sensor signals and for generating brake pressure control signals (TAV), and a brake pressure control unit (4, 5) which is fed the brake pressure control signals for the purpose of pressure variation, characterized in that the evaluation circuit (3, 6-14) for determining the brake pressure control signals (TAV) is configured in such a way that the acceleration (ARI) of at least one wheel is limited to values (ARS) which depend on the maximum slip value (SRIM) within a prescribable time interval.

**Revendications**

1.  Procédé pour commander un système de freinage des roues d'un véhicule consistant en des détecteurs (1, 2) servant à déterminer le mode de déplacement de la roue, en un circuit d'exploitation (3) servant à retraiter les signaux des détecteurs et à produire des signaux de commande de pression de freinage (TAV), et en une unité de commande de pression de freinage (4, 5) à laquelle sont amenés les signaux de commande de pression de freinage servant à faire varier la pression, des signaux de patinage (SRI) et des signaux d'accélération (ARI) d'au moins une roue ou d'un groupe de roues étant formés,
    procédé caractérisé en ce que
    à l'intérieur d'un intervalle de temps que l'on peut prédéfinir, on détecte la valeur maximale de patinage (SRIM) à partir des signaux de patinage (SRI) et l'on détermine les signaux de commande de pression de freinage (TAV) d'une manière telle qu'on limite l'accélération (ARI) d'au moins une roue à des valeurs (ARS) qui sont fonction de la valeur maximale (SRIM) du patinage.

2.  Procédé selon la revendication 1,
    caractérisé en ce que
    pour faire varier la pression, on produit des signaux de pression de freinage dont la durée (TAV) est déterminée en fonction de la valeur maximale détectée (SRIM) du patinage.

3.  Procédé selon la revendication 2,
    caractérisé en ce que
    pour déterminer la durée (TAV) des signaux de commande de pression de freinage, on détermine une durée de base (TAVI) et une grandeur de correction (TAVK) servant à corriger la durée de base (TAVI), la grandeur de correction (TAVK) étant déterminée en fonction de la valeur maximale détectée (SRIM) du patinage.

4.  Procédé selon la revendication 3,
    caractérisé en ce que
    l'intervalle de temps prédéfini correspond à un cycle de régulation et la grandeur de correction (TAVK) sert à corriger la durée de base (TAVI) de la variation de la pression lors du cycle suivant de régulation.

5.  Procédé selon la revendication 3 ou 4,
    caractérisé en se que
    à l'intérieur de l'intervalle de temps que l'on peut prédéfinir, on déteste à partir des signaux d'accélération (ARI) d'au moins une roue ou d'un groupe de roues, la valeur maximale d'accélération (ARIM), et l'on détermine à partir de la valeur maximale déterminée (SRIM) du patinage une valeur de consigne corrigée (ARS) pour l'accélération de la roue ou des roues, puis on compare cette valeur de consigne (ARS) à la valeur maximale d'accélération déterminée (ARIM) et l'on détermine la grandeur de correction (TAVK) en fonction de la différence (DAR) entre la valeur maximale déterminée d'accélération (ARIM) et la valeur corrigée de consigne (ARS).

6.  Dispositif pour la mise en oeuvre du procédé selon la revendication 1 servant à commander un système de freinage des roues d'un véhicule, dans le cas duquel sont prévus les détecteurs (1, 2) servant à déterminer le mode de déplacement de la roue, un circuit d'exploitation (3) pour retraiter les signaux des détecteurs et produire des signaux de commande de pression de freinage (TAV), et une unité de commande de pression de freinage (4, 5) à laquelle sont amenés les signaux de commande de pression de freinage servant à faire varier la pression, des signaux de patinage (SRI) et des signaux d'accélération (ARI) d'au moins une roue ou d'un groupe de roues étant formés,
    caractérisé en ce que
    le circuit d'exploitation (3, 6-14) est constitué d'une manière telle qu'à l'intérieur d'un intervalle de temps que l'on peut prédéfinir, on détecte la valeur maximale (SRIM) du patinage à partir des signaux de patinage (SRI) et l'on détermine les signaux de commande de pression de freinage (TAV) d'une manière telle que l'accélération (ARI) d'au moins une roue soit limitée à des valeurs qui dépendent de la valeur maximale (SRIM) du patinage.

7.  Procédé pour commander un système de freinage des roues d'un véhicule, consistant en des détecteurs (1, 2) servant à déterminer le mode de déplacement de la roue, en un circuit d'exploitation (3) servant à retraiter les signaux des détecteurs et à produire des signaux de commande de pression de freinage (TAV), et en une unité de commande de pression de freinage (4, 5) à laquelle sont amenés les signaux de commande de pression de freinage servant à faire varier la pression,
    caractérisé en ce que
    les signaux de commande de pression de freinage (TAV) sont déterminés d'une manière telle que l'accélération (ARI) d'au moins une roue soit limitée à des valeurs (ARS), qui soient fonction de la valeur maximale (SRIM) du patinage à l'intérieur d'un intervalle de temps que l'on peut prédéfinir.

8. Dispositif pour la mise en oeuvre du procédé selon la revendication 7, servant à commander un système de freinage des roues d'un véhicule, dans lequel sont prévus des détecteurs (1, 2) servant à déterminer le mode de déplacement de la roue, un circuit d'exploitation (3) pour retraiter les signaux des détecteurs et produire des signaux de commande de pression de freinage (TAV), et une unité de commande de pression de freinage (4, 5) à laquelle sont amenés les signaux de commande de pression de freinage pour faire varier la pression, caractérisé en ce que
le circuit d'exploitation (3, 6-14) qui sert à déterminer les signaux de commande de pression de freinage (TAV), est constitué d'une manière telle que l'accélération (ARI) d'au moins une roue est limitée à des valeurs (ARS) qui sont fonction de la valeur maximale (SRIM) du patinage à l'intérieur d'un intervalle de temps que l'on peut prédéfinir.